# EUROPEAN PATENT SPECIFICATION

(11) **EP 0 365 878 B1**
(45) Date of publication and mention of the grant of the patent: **14.06.1995**
(21) Application number: 89118325.3
(22) Date of filing: 03.10.1989
(51) Int. Cl.: G06T 7/40

(54) **Image processing method**
Bildverarbeitungsverfahren
Méthode de traitement d'image

(30) Priority: 25.10.1988 JP 268908/88
(43) Date of publication of application: 02.05.1990
(73) Proprietor: YOZAN INC., Tokyo 155 (JP); SHARP KABUSHIKI KAISHA, Osaka 545 (JP)
(72) Inventor: Kumagai, Ryohei, Bunkyo-ku Tokyo 112 (JP)
(74) Representative: Grünecker, Kinkeldey, Stockmair & Schwanhäusser Anwaltssozietät

(56) References cited:
- EP-A- 0 110 353
- EP-A- 0 340 549
- PATTERN RECOGNITION, vol. 20, no. 1, 1987, pages 17-31, Pergamon Journals Ltd,GB; S.J. ROAN et al.: "Multiple resolution imagery and texture analysis"

## Description

The present invention relates to an image processing method for generating a density cooccurrence matrix of an original image.

The density cooccurrence matrix is an important characteristic for texture analysis. By conventional methods, it takes a long time to generate such a density cooccurrence matrix. A density cooccurrence matrix is a two dimensional expression of a relationship between the density of each pixel and other pixels.

The inventor supposes that by conventional methods a shifted image shifted by a predetermined distance is generated from the original image, and then corresponding pixels of both images are compared with each other. For this processing, a lot of process time is necessary when processed by a software, and a plurality of scanning at least equal to the number of graduation levels is necessary. When one time scanning is performed in video rate, it takes about one second for processing an image of 16 level graduation.

From EP-A2-O 340 549 which forms a part of the state of the art within the meaning of Article 54 (3) EPC to the present invention an image processing method for generating an cooccurrence matrix in a very fast manner is known. According to the therein disclosed method an original image is stored in a first memory and the shifted version of that original image is stored in a second memory. The image density data stored in the second memory is successively read out and applied to a counter portion as address data. Simultaneously the corresponding data of the first memory is read out and applied to a comparator means. Within the comparator, the applied density data from the first memory is compared with a predetermined density value and in case of coincidence between the predetermined value and the currently applied density value a count signal is transmitted from the comparator means to the data input of the counter portion increasing the counter value stored under the currently selected address of the counter portion. After scanning of all data from the first and second memory, the predetermined value inputted to the comparator means is changed in order to generate by a next scanning a further row (column) of the cooccurrence matrix.

It is the object of the present invention to provide an improved image processing method for generating a density cooccurrence matrix with high process speed.

This object is solved by the subject matter of claim 1.

Exemplary preferred embodiments according to the present invention will be described in detail hereinafter with reference to the accompanying drawings.
Fig. 1 shows an image processing system used for an image processing method according to the present invention;
Fig. 2 shows an image to be processed;
Fig. 3 shows a shifted image which is shifted from the original image by a predetermined distance;
Fig. 4 shows a density data of a pixel of the original image;
Fig. 5 shows a density data of a pixel of the image of Fig. 3;
Fig. 6 shows a data generated by shifting the data of Fig. 4 by 4 bits to the left;
Fig. 7 shows a data generated by adding each bit of the data of Fig. 5 to the corresponding data bit of Fig. 6; and
Fig. 8 shows a data generated by shifting the data of Fig. 4 by 1 bit to the left.

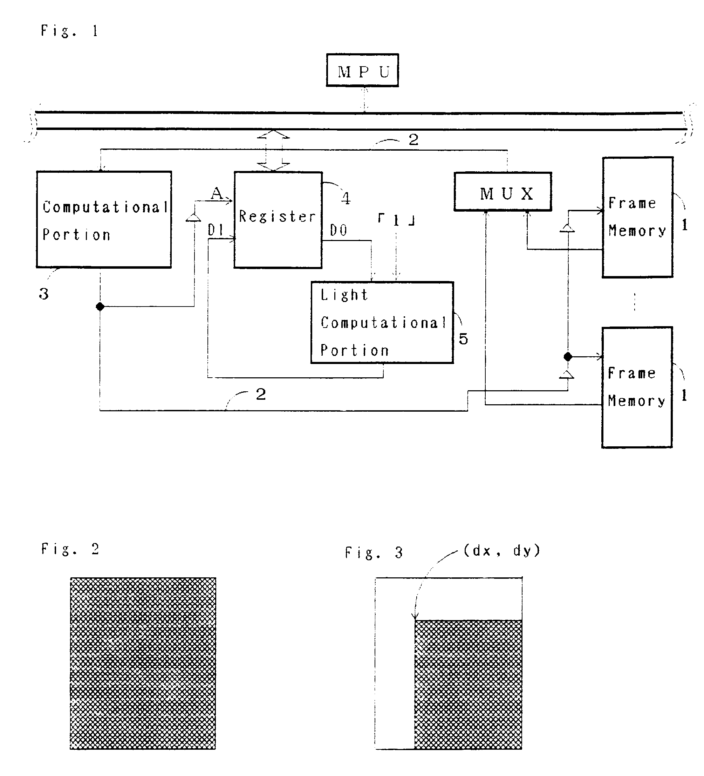

Fig. 1 shows an image processing system useful for one embodiment of the present invention. The image processing system comprises a frame memory 1 of plurality of planes and a computational portion 3 connected through a local bus 2 to the frame memory 1. To the computational portion 3 image data from the frame memory 1 is inputted and the computational portion 3 outputs the computational result to frame memory 1 or a register 4.

A data output of the register 4 is connected to a light computational portion 5. An output of the portion 5 is inputted to an data input DI of the register 4. An output of the computational portion 3 is inputted to an address input A of the register 4 for designating an address of the register 4 according to the computational result of the computational portion 3.

The light computational portion 5 has a performance of increasing by "1" the data from a data output DO of the register 4. The increased data is inputted to the data input DI of the register 4 again. In that manner the register stores the number of outputting times from the computational portion 3 for each value of the computational result.

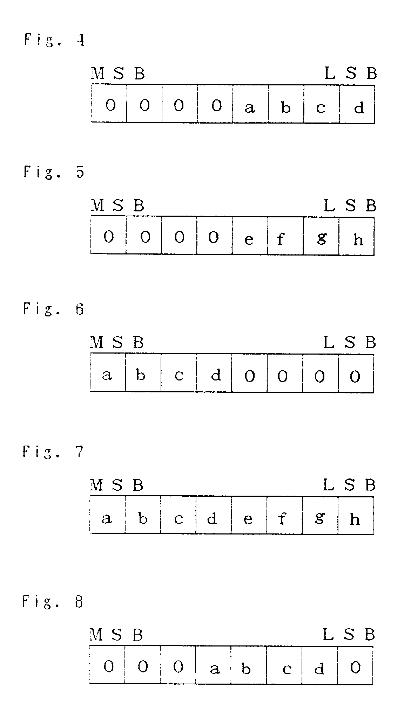

A shifted image (Fig. 2) by a predetermined distance (dx, dy) from an original image (Fig. 3) is generated first, for generating a density cooccurrence matrix. In order to generate the shifted image, the original image is passed through the computational portion 3 without computation, with shifting the reading timing and writing timing of the frame memory. When the writing timing is advanced by dx pixels to the reading timing in the scan line direction, an image shifted by dx in the x-direction is generated. A shifted image in the y-direction is generated similarly to the above. Fig. 3 shows an image shifted by a distance of (dx, dy) form the original image in Fig. 2.

The original image has been already quantized to the amount of graduation levels the density cooccurrence matrix is expected to have there are 16 graduation levels, each pixel has a data of density with a data length of 4 bits. When the data length of each pixel in the frame memory is 8 bits, the lower 4 bits are valid as shown in Fig. 4. The invalid data of upper 4 bits can be refreshed to "0" by initializing the frame memory before storing the quantized image.

Next, each data of the original image or the shifted image is shifted leftward by a length is bits equal to or more than the length is bits of the bit string of pixel data. The data of bit shifting is shown in Fig. 6, which consists of upper valid 4 bits and lower "0" bit string. The bit shifting is performed by the computational portion 3 which has a performance of bit shifting or a performance of multiplication by a multiplier of 2ⁿ.

In this embodiment, the data of the original image is shifted by 4 bit as shown in Fig. 6. Data length of each data of shifted image by 4 bits is equal to the length of the data of the original image. The data of the shifted image includes valid data of lower 4 bits, the upper 4 bits of which are "0". Since the lower 4 bits of the data of the original image are automatically changed to "0" by bit shifting and the original upper 4 bits are changed to the original lower 4 bits on the bit shifting, the original upper 4 bits may be any data. However, as for the data in Fig. 5, the upper 4 bits of the data in Fig. 5 are necessary to be "0".

The images of Figs 5 and 6 are parallelly inputted to the computational portion 3 which calculates addition or OR logic of data of corresponding pixels of both images. The calculation result, shown in Fig. 7, is inputted to the address input A of the register 4. The register 4 is initialized before the processing. Data stored in each address of the register 4 finally becomes the outputting times of each value of the calculation result of the computational portion 3.

Here the upper 4 bits of the data in Fig. 7 is defined as H1, lower 4 bits as H2, and the data storaged in each address of the register as Cij. The register stores a density cooccurrence matrix as shown below. 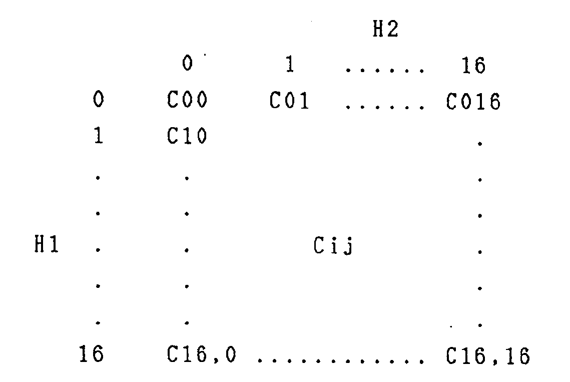
In the above embodiment, the computational portion 3 performs 4 bits bit shifting. When there is a limit of bit shifting, for example the multiplier has a data length less than 5 bits and therefor 4 bits bit shifting is impossible, bit shifting within the limit is performed simultaneously with the coordinate shifting by the distance. Fig. 8 shows data which is shifted by one bit to the left from the data of Fig. 4. The data in Fig. 8 is shifted by 3 bits simultaneously with the adding-or OR-processing. The above embodiment needs 2 scannings.

As will be understood from the description above, as far as the graduation level is equal to or less than the half bits data of pixel data in the frame memory, the density cooccurrence matrix is generated by 2 scannings; one scanning for coordinate shifting and one scanning for bit shifting or other combinations. This scanning time is much smaller as with conventional methods which need scanning times of (1+m), where m is graduation levels. Therefore, the processing time is 1/m of the time needed with conventional methods.

## Claims

1. An image processing method for generating a density cooccurrence matrix of an original image comprising steps of:
generating a shifted image by shifting said image by a predetermined distance;
generating a bit string consisting of pixel data of said image and corresponding pixel data of said shifted image wherein said bit string is generated by steps of:
shifting a bit string of pixel data of said original image or said shifted image in a predetermined direction by a length in bits equal to or more than the length in bits of the valid portion of said bit string of said pixel data; and
performing addition or OR logic of said shifted bit string with the bit string of the corresponding pixel data of the other image; and
counting the number of said bit strings for each value of said bit string.

2. Image processing method according to claim 1, wherein said bit shifting is performed with respect to the image which is shifted by the predetermined distance.

3. Image processing method according to claim 2, wherein said bit shifting is performed at least partially simultaneously with said shifting by a predetermined distance.

4. Image processing method according to one of the preceeding claims, wherein said calculation of addition or OR logic is performed in a computational portion (3).

5. Image processing method according to Claim 4, wherein said bit shifting is performed also in said computational portion (3).

6. Image processing method according one of the preceeding claims, wherein said counting is performed by a register (4) connected with a light computational portion (5) which increases a data in said register by "1".

7. Image processing method according to Claim 6, wherein said light computational portion (5) is connected to a data output of said register (4) as well as to a data input of said register (4).

8. Image processing method according to one of the preceeding claims wherein said original image and said shifted image are stored in a frame memory (1).

9. An image processing method according to one of the claims 4 to 8, wherein said original image and said shifted image are parallelly inputted to said computational portion (3).

## Patentansprüche

1. Bildverarbeitungsverfahren zum Erzeugen einer Dichte-Cooccurrence-Matrix eines Ursprungsbildes mit folgenden Schritten:
Erzeugen eines verschobenen Bildes durch Verschieben des Bildes um eine vorgegebene Distanz;
Erzeugen eines Bitstrings, welcher aus Pixeldaten des Bildes und entsprechenden Pixeldaten des verschobenen Bildes besteht, wobei der Bitstring durch folgende Schritte erzeugt wird:
Verschieben eines Bitstrings von Pixeldaten des ursprünglichen Bildes oder des verschobenen Bildes in eine vorgegebene Richtung und um eine Bitlänge, die gleich oder größer ist als die Bitlänge des gültigen Abschnitts des Bitstrings der Pixeldaten; und
Erzeugen einer Addition oder einer logischen ODER-Verknüpfung zwischen dem verschobenen Bitstring und dem Bitstring der korrespondierenden Pixeldaten des anderen Bildes; und
Zählen der Anzahl der Bitstrings für jeden Wert des Bistrings.

2. Bildverarbeitungsverfahren nach Anspruch 1, wobei die Bitverschiebung in bezug auf das Bild durchgeführt wird, welches um die vorgegebene Distanz verschoben ist.

3. Bildverarbeitungsverfahren nach Anspruch 2, wobei die Bitverschiebung zumindest teilweise gleichzeitig mit dem Verschieben um die vorgegebene Distanz ausgeführt wird.

4. Bildverarbeitungsverfahren nach einem der vorhergehenden Ansprüche, wobei die Berechnung der Addition oder der logischen ODER-Verknüpfung in einer Berechnungseinheit (3) durchgeführt wird.

5. Bildverarbeitungsverfahren nach Anspruch 4, wobei die Bitverschiebung auch in der Berechnungseinheit (3) durchgeführt wird.

6. Bildverarbeitungsverfahren nach einem der vorhergehenden Ansprüche, wobei das Zählen durch ein Register (4) ausgeführt wird, welches mit einer einfachen Berechnungseinheit (5) verbunden ist, welche Daten in dem Register um "1" erhöht.

7. Bildverarbeitungsverfahren nach Anspruch 6, wobei die einfache Berechnungseinheit (5) mit einem Datenausgang des Registers (4) sowie mit einem Dateneingang für das Register(4) verbunden ist.

8. Bildverarbeitungsverfahren nach einem der vorhergehenden Ansprüche, wobei das ursprüngliche Bild und das verschobene Bild in einem Frame-Speicher (1) gespeichert sind.

9. Bildverarbeitungsverfahren nach einem der Ansprüche 4 bis 8, wobei das ursprüngliche Bild und das verschobene Bild parallel in die Berechnungseinheit (3) eingegeben werden.

## Revendications

1. Procédé de traitement d'image destiné à générer une matrice à co-présence de densité d'une image originale comprenant les étapes consistant à :
générer une image décalée en décalant ladite image d'une distance prédéterminée,
générer une chaîne binaire constituée de données d'éléments d'image de ladite image et de données d'éléments d'image correspondant de ladite image décalée dans laquelle ladite chaîne binaire est générée par les étapes consistant à :
décaler une chaîne binaire de données d'éléments d'image de ladite image originale ou de ladite image décalée suivant une direction prédéterminée d'une longueur d'éléments binaires égale ou supérieure à la longueur d'éléments binaires de la partie valide de ladite chaîne binaire desdites données d'éléments d'image, et
effectuer une addition ou une opération de OU logique de ladite chaîne binaire décalée avec la chaîne binaire des données d'éléments d'image correspondant de l'autre image, et
compter le nombre desdites chaînes binaires pour chaque valeur de ladite chaîne binaire.

2. Procédé de traitement d'image selon la revendication 1, dans lequel ledit décalage binaire est effectué par rapport à l'image qui est décalée de la distance prédéterminée.

3. Procédé de traitement d'image selon la revendication 2, dans lequel ledit décalage binaire est effectué au moins partiellement simultanément avec ledit décalage d'une distance prédéterminée.

4. Procédé de traitement d'image selon l'une quelconque des revendications précédentes, dans lequel ledit calcul par addition ou opération de OU logique est effectué dans une partie de calcul automatisable (3).

5. Procédé de traitement d'image selon la revendication 4, dans lequel ledit décalage binaire est également effectué dans ladite partie de calcul automatisable (3).

6. Procédé de traitement d'image selon l'une quelconque des revendications précédentes, dans lequel ledit comptage est effectué par un registre (4) relié à une partie de calcul automatisable légère (5) qui augmente de "1" une donnée présente dans ledit registre.

7. Procédé de traitement d'image selon la revendication 6, dans lequel ladite partie de calcul automatisable légère (5) est reliée à une sortie de données dudit registre (4) de même qu'à une entrée de données dudit registre (4).

8. Procédé de traitement d'image selon l'une quelconque des revendications précédentes, dans lequel ladite image originale et ladite image décalée sont mémorisées dans une mémoire de trame (1).

9. Procédé de traitement d'image, selon l'une quelconque des revendications 4 à 8, dans lequel ladite image originale et ladite image décalée sont appliquées parallèlement à ladite partie de calcul automatisable (3).
